# EUROPÄISCHE PATENTANMELDUNG

(11) **EP 4 602 904 A1**
(43) Veröffentlichungstag der Anmeldung: **20.08.2025**
(21) Anmeldenummer: 25157567.6
(22) Anmeldetag: 13.02.2025
(51) Int. Cl.: A01B 59/00, A01B 69/00

(54) **ANBAUMASCHINE UND VERFAHREN ZUM EINSTELLEN EINER ANBAUMASCHINE**

(30) Priorität: 15.02.2024 DE 102024104187
(71) Anmelder: Amazonen-Werke H. Dreyer SE & Co. KG, 49205 Hasbergen (DE)
(72) Erfinder: Lenz, Tino, 49205 Hasbergen (DE)

(57) **Zusammenfassung**

Die Erfindung betrifft eine landwirtschaftliche Anbaumaschine (10), insbesondere eine landwirtschaftliche Hacke oder Feldspritze, mit mehreren Arbeitswerkzeugen (12) zum Bearbeiten des Bodens und/oder zum Pflegen von Nutzpflanzen auf einer landwirtschaftlichen Nutzfläche (N) und einem Verschieberahmen (14), welcher dazu eingerichtet ist, die Arbeitswerkzeuge (12) zum Korrigieren der Position und/oder der Ausrichtung der Arbeitswerkzeuge (12) in Abhängigkeit eines aktuellen Maschinenzustands der Anbaumaschine (10) zu verfahren.

## Beschreibung

Die Erfindung betrifft eine landwirtschaftliche Anbaumaschine nach dem Oberbegriff des Patentanspruchs 1 und ein Verfahren zum Einstellen nach dem Oberbegriff des Patentanspruchs 13.

Bei der Bodenbearbeitung und/oder bei Pflegevorgängen von Nutzpflanzen auf landwirtschaftlichen Nutzflächen mittels landwirtschaftlicher Anbaumaschinen ist höchste Präzision gefordert, um bei Bodenbearbeitungs- und/oder Pflegevorgängen stets eine gleichbleibend hohe Arbeitsqualität sicherzustellen. Sind die Arbeitswerkzeuge der landwirtschaftlichen Anbaumaschine unpräzise eingestellt oder wird die Einstellung der Arbeitswerkzeuge während eines Bodenbearbeitungs- und/oder Pflegevorgangs nicht oder nur unzureichend korrigiert, leidet die Arbeitsqualität, wodurch beispielsweise das Pflanzenwachstum der Nutzpflanzen auf der Nutzfläche beeinträchtigt werden kann oder den Nutzpflanzen sogar Schäden zugefügt werden, beispielsweise wenn die Arbeitswerkzeuge unbeabsichtigten mechanischen Kontakt zu den Nutzpflanzen aufweisen.

Aus dem Stand der Technik ist es bekannt, dass die Position und/oder die Ausrichtung der Arbeitswerkzeuge während eines Bodenbearbeitungs- und/oder Pflegevorgangs korrigiert wird, indem die Arbeitswerkzeuge über einen Verschieberahmen der Anbaumaschine verfahren werden. Die Korrektur der Position und/oder der Ausrichtung der Arbeitswerkzeuge mittels des Verschieberahmens, welche aus dem Stand der Technik bekannt ist, ist allerdings häufig nicht präzise genug, um während eines Bodenbearbeitungs- und/oder Pflegevorgangs die Position und/oder Ausrichtung der Arbeitswerkzeuge stets derart zuverlässig zu korrigieren, dass jederzeit eine gleichbleibend hohe Arbeitsqualität sichergestellt wird und/oder dass Beschädigungen der Nutzpflanzen zuverlässig verhindert werden.

Die der Erfindung zugrundeliegende Aufgabe besteht somit darin, die Arbeitsqualität von landwirtschaftlichen Anbaumaschinen mittels einer zuverlässigeren und präziseren Korrektur der Position und/oder der Ausrichtung der Arbeitswerkzeuge zu verbessern.

Die Aufgabe wird gelöst mit einer landwirtschaftlichen Anbaumaschine der eingangs genannten Art, wobei die landwirtschaftliche Anbaumaschine eine elektronische Datenverarbeitungseinrichtung umfasst, welche dazu eingerichtet ist, aus dem aktuellen Maschinenzustand der Anbaumaschine Korrekturdaten zum Korrigieren der Position und/oder der Ausrichtung der Arbeitswerkzeuge mittels des Verschieberahmens abzuleiten.

Durch das Ableiten von Korrekturdaten zum Korrigieren der Position und/oder der Ausrichtung der Arbeitswerkzeuge durch eine elektronische Datenverarbeitungseinrichtung kann sichergestellt werden, dass die Arbeitswerkzeuge mittels des Verschieberahmens zum Korrigieren der Position und/oder der Ausrichtung der Arbeitswerkzeuge stets so verfahren werden, dass während eines Bodenbearbeitungs- und/oder Pflegevorgangs zu jeder Zeit eine zuverlässige und präzise Bearbeitung des Bodens und/oder Pflege der Nutzpflanzen auf der landwirtschaftlichen Nutzfläche ermöglicht wird. Auf diese Weise wird folglich eine gleichbleibend hohe Arbeitsqualität der Anbaumaschine erreicht, wobei insbesondere Beschädigungen der Nutzpflanzen vermieden werden. Insbesondere ist vorgesehen, dass die abgeleiteten Korrekturdaten dem Benutzer angezeigt werden und/oder der Verschieberahmen auf Basis der abgeleiteten Korrekturdaten mittels der Datenverarbeitungseinrichtung, vorzugsweise automatisch, eingestellt wird.

Die Anbaumaschine kann als getragene oder als gezogene Anbaumaschine ausgebildet sein. Vorzugsweise wird die Anbaumaschine von einem Zug- oder Trägerfahrzeug gezogen oder getragen. Die Arbeitswerkzeuge sind vorzugsweise an dem Verschieberahmen angeordnet und/oder befestigt, insbesondere beabstandet voneinander und nebeneinander quer zur Fahrtrichtung der Anbaumaschine. Der Verschieberahmen ist vorzugsweise Bestandteil eines Reihenführungssystems der landwirtschaftlichen Anbaumaschine. Der Verschieberahmen kann als Linearverschieberahmen oder als Parallelverschieberahmen ausgebildet sein. Vorzugsweise verfährt der Verschieberahmen die Arbeitswerkzeuge parallel zum Boden der Nutzfläche und/oder relativ zu Pflanzenreihen auf der Nutzfläche, insbesondere quer zur Fahrtrichtung der Anbaumaschine. Durch das Verfahren der Arbeitswerkzeuge mittels des Verschieberahmens wird insbesondere der Abstand zwischen den Nutzpflanzen auf der Nutzfläche, insbesondere den Pflanzenreihen, und den Arbeitswerkzeugen verändert. Zudem kann durch das Verfahren der Arbeitswerkzeuge mittels des Verschieberahmens die Ausrichtung der Arbeitswerkzeuge relativ zum Boden der Nutzfläche und/oder zu den Nutzpflanzen auf der Nutzfläche verändert werden, insbesondere ein Winkel zwischen den Arbeitswerkzeugen und/oder dem Boden und/oder den Nutzpflanzen.

Bei einer landwirtschaftlichen Hacke sind die Arbeitswerkzeuge insbesondere als Hackmesser ausgebildet. Bei einer landwirtschaftlichen Feldspritze sind die Arbeitswerkzeuge insbesondere als Spritzdüsen ausgebildet. Durch das Korrigieren der Position und/oder der Ausrichtung der Arbeitswerkzeuge mittels des Verschieberahmens soll insbesondere sichergestellt werden, dass die Arbeitswerkzeuge auch bei äußeren Einflüssen auf die Anbaumaschine und/oder die Arbeitswerkzeuge der Anbaumaschine, insbesondere bei Hangneigung und daraus resultierendes Abrutschen der Anbaumaschine am Hang, jederzeit in einer beabsichtigten Position und/oder Ausrichtung angeordnet und/oder eingestellt sind. Bei einer landwirtschaftlichen Hacke wird auf diese Weise beispielsweise sichergestellt, dass die Arbeitswerkzeuge zwischen den Pflanzenreihen in einem beabsichtigten Abstand zu den Pflanzen laufen, sodass keine Pflanze durch die Hackwerkzeuge beschädigt werden kann. Bei landwirtschaftlichen Feldspritzen werden auf diese Weise die Spritzdüsen derart mittels des Verschieberahmens verschoben, dass die Spritzflüssigkeit wie beabsichtigt auf die Nutzpflanzen appliziert wird und somit ein gewünschtes Spritzbild erzeugt wird.

Ein aktueller Maschinenzustand betrifft beispielsweise die Fahrgeschwindigkeit der Anbaumaschine und/oder des Zug- oder Trägerfahrzeugs, eine aktuelle Ausrichtung und/oder Position der Arbeitswerkzeuge, die aktuelle Geoposition der Anbaumaschine und/oder des Zug- oder Trägerfahrzeugs, die aktuelle Lage und/oder Ausrichtung und/oder Richtungsänderung der Anbaumaschine, insbesondere in Bezug auf das Zug- und/oder Trägerfahrzeug und/oder den Abstand der Arbeitswerkzeuge zu den Pflanzenreihen.

Statt mittels eines Verschieberahmens können die Arbeitswerkzeuge auch über die Dreipunkthydraulik des Zug- oder Trägerfahrzeugs korrigiert werden, über welche die Anbaumaschine an dem Zug- oder Trägerfahrzeug befestigt ist. Über die Dreipunkthydraulik des Zug- oder Trägerfahrzeugs wird insbesondere die gesamte Anbaumaschine verfahren, wobei folglich durch ein Verfahren mittels der Dreipunkthydraulik auch die Arbeitswerkzeuge verfahren werden können.

Zum Korrigieren der Position und/oder Ausrichtung der Arbeitswerkzeuge werden vorzugsweise mehrere Arbeitswerkzeuge, insbesondere alle Arbeitswerkzeuge, gemeinsam verfahren. Bei Feldspritzen werden beispielsweise mehrere Spritzdüsen in einem Düsenverbund gemeinsam verfahren. Die Datenverarbeitungseinrichtung leitet die Korrekturdaten vorzugsweise in kurzen Zeitabständen fortlaufend neu ab, beispielsweise alle 100 ms. Die Datenverarbeitungseinrichtung kann an der Anbaumaschine angeordnet sein. Die Datenverarbeitungseinrichtung kann zudem Bestandteil eines Bedienterminals für die Anbaumaschine und/oder das Zug- oder Trägerfahrzeug sein.

In einer bevorzugten Ausführungsform der landwirtschaftlichen Anbaumaschine umfasst die landwirtschaftliche Anbaumaschine zumindest eine sensorische Erfassungseinrichtung zum Erfassen von den aktuellen Maschinenzustand der Anbaumaschine betreffenden Zustandsdaten. Die zumindest eine Erfassungseinrichtung kann als sensorische oder optische Erfassungseinrichtung ausgebildet sein. Es können mehrere Erfassungseinrichtungen, insbesondere mehrere sensorische und/oder mehrere optische Erfassungseinrichtungen an der Anbaumaschine angeordnet sein. Die zumindest eine Erfassungseinrichtung ist vorzugsweise an der Anbaumaschine angeordnet. Die zumindest eine Erfassungseinrichtung kann alternativ oder zusätzlich an dem Zug- oder Trägerfahrzeug für die Anbaumaschine angeordnet sein.

Die zumindest eine Erfassungseinrichtung ist vorzugsweise dazu eingerichtet, den aktuellen Maschinenzustand der Anbaumaschine betreffende Zustandsdaten zu erfassen. Vorzugsweise ist die zumindest eine Erfassungseinrichtung Bestandteil eines Reihenführungssystems der Anbaumaschine, beispielsweise zum Erfassen von Nutzpflanzen auf der Nutzfläche, insbesondere zum Erfassen des Reihenabstands, der Pflanzenbreite und/oder Pflanzenhöhe der Nutzpflanzen auf der Nutzfläche. Das Reihenführungssystem ist insbesondere als kamerabasiertes Reihenführungssystem ausgebildet, wobei zumindest eine Erfassungseinrichtung als Kamera zum Erfassen von Nutzpflanzen auf der landwirtschaftlichen Nutzfläche betreffenden Nutzpflanzendaten ausgebildet sein kann. Vorzugsweise sind die zumindest eine Erfassungseinrichtung und die Datenverarbeitungseinrichtung signalleitend, insbesondere per ISOBUS, miteinander verbunden. Mittels der signalleitenden Verbindung können die mittels der Erfassungseinrichtung erfassten Daten zum Auswerten an die Datenverarbeitungseinrichtung übermittelt werden.

Die Zustandsdaten können beispielsweise die Fahrgeschwindigkeit der Anbaumaschine und/oder des Zug- oder Trägerfahrzeugs, eine aktuelle Ausrichtung und/oder Position der Arbeitswerkzeuge, die aktuelle Geoposition der Anbaumaschine und/oder des Zug- oder Trägerfahrzeugs, die aktuelle Lage und/oder Ausrichtung und/oder Richtungsänderung der Anbaumaschine, insbesondere in Bezug auf das Zug- oder Trägerfahrzeug und/oder den Abstand der Arbeitswerkzeuge zu den Pflanzenreihen betreffen.

In einer anderen bevorzugten Ausführungsform der landwirtschaftlichen Anbaumaschine ist die sensorische Erfassungseinrichtung als Neigungssensor ausgebildet, welcher dazu eingerichtet ist, die Neigung der Anbaumaschine betreffende Sensordaten zu erfassen, wobei die elektronische Datenverarbeitungseinrichtung vorzugsweise dazu eingerichtet ist, aus den die Neigung der Anbaumaschine betreffenden Sensordaten die Neigung der Anbaumaschine, insbesondere die Neigung um eine Längsachse in Fahrtrichtung der Anbaumaschine und/oder die Neigung um eine Querachse quer zur Fahrtrichtung der Anbaumaschine, abzuleiten. Durch die Neigung der Anbaumaschine kann vorzugsweise abgeleitet werden, ob und inwieweit die Anbaumaschine bei einer geneigten Nutzfläche, beispielsweise während eines Bearbeitungs- oder Pflegevorgangs am Hang, hangabwärts abrutscht und/oder abdriftet. Durch das Abrutschen und/oder Abdriften der Anbaumaschine am Hang können sich die Arbeitswerkzeuge aus einer beabsichtigten Position und/oder Ausrichtung herausbewegen, wodurch die Arbeitsqualität herabgesetzt werden kann und/oder wodurch Beschädigungen der Nutzpflanzen entstehen können.

Die sensorische Erfassungseinrichtung ist vorzugsweise dazu eingerichtet, die Neigung der Anbaumaschine um mehrere Achsen der Anbaumaschine, insbesondere um die Längsachse, beispielsweise die X-Achse der Anbaumaschine, und um die Querachse, beispielsweise die Y-Achse der Anbaumaschine, zu erfassen. Auf diese Weise erfolgt eine mehrdimensionale Erfassung der Neigungen der Anbaumaschine.

Im Stand der Technik erfolgt nur eine eindimensionale Erfassung der Neigung, beispielsweise ausschließlich um die Y-Achse der Anbaumaschine. Eine eindimensionale Erfassung der Neigung um nur eine Achse der Anbaumaschine sorgt für eine unzuverlässige und unpräzise Korrektur der Lage und/oder Ausrichtung und/oder Position der Arbeitswerkzeuge, wodurch insbesondere bei Bearbeitungs- und/oder Pflegevorgängen mittels der Anbaumaschine am Hang einer geneigten Nutzfläche keine zuverlässig hohe Arbeitsqualität sichergestellt werden kann und/oder Beschädigungen der Nutzpflanzen drohen.

Vorzugsweise ist der Neigungssensor an der Anbaumaschine angeordnet. Ist die Anbaumaschine als getragene Anbaumaschine ausgebildet, kann der Neigungssensor zudem am Zug- oder Trägerfahrzeug für die Anbaumaschine angeordnet sein. Es können mehrere Neigungssensoren an der Anbaumaschine und/oder dem Zug- oder Trägerfahrzeug angeordnet sein. Die mittels der Neigungssensoren ermittelten Sensordaten werden vorzugsweise zum Auswerten an die Datenverarbeitungseinrichtung, insbesondere per ISOBUS, übertragen. Die Sensordaten können zudem auf einem Datenspeicher gespeichert werden, beispielsweise um die Sensordaten für eine spätere Auswertung zu sichern.

In einer weiteren bevorzugten Ausführungsform der landwirtschaftlichen Anbaumaschine ist die sensorische Erfassungseinrichtung Bestandteil einer Kamera, welche dazu eingerichtet ist, die Neigung der Anbaumaschine betreffende Bilddaten zu erfassen, wobei die elektronische Datenverarbeitungseinrichtung vorzugsweise dazu eingerichtet ist, aus den die Neigung der Anbaumaschine betreffenden Bilddaten die Neigung der Anbaumaschine, insbesondere die Neigung um eine Längsachse in Fahrtrichtung der Anbaumaschine und/oder die Neigung um eine Querachse quer zur Fahrtrichtung der Anbaumaschine, abzuleiten. Alternativ oder zusätzlich zu einem oder mehreren Neigungssensoren kann die Neigung der Anbaumaschine um ihre X-Achse und/oder um ihre Y-Achse optisch erfasst werden, beispielsweise mittels einer oder mehrerer Kameras. Die mittels der Erfassungseinrichtung optisch erfassten Bilddaten werden vorzugsweise zum Auswerten an die Datenverarbeitungseinrichtung, insbesondere per ISOBUS, übertragen.

Vorzugsweise ist die Datenverarbeitungseinrichtung dazu eingerichtet, die Bilddaten zum Ableiten der Neigung der Anbaumaschine um mehrere ihrer Achsen, insbesondere um ihre Längsachse und ihre Querachse, auszuwerten. Beispielsweise können zum Erfassen der Bilddaten zum Ableiten der Neigung der Anbaumaschine die Kameras des Reihenführungssystems der Anbaumaschine genutzt werden, welche normalerweise die Pflanzenreihen auf der Nutzfläche erfassen, insbesondere, um den Abstand der Arbeitswerkzeuge zu den Pflanzenreihen zu erfassen. Vorzugsweise ist die Datenverarbeitungseinrichtung dazu eingerichtet, eine Bildauswertung der Bilddaten auszuführen, insbesondere zum Bestimmen des Abstands und/oder des Winkels der Arbeitswerkzeuge zu den Pflanzenreihen, um folglich die Neigung der Anbaumaschine abzuleiten. Durch das Verfahren des Verschieberahmens wird vorzugsweise zusätzlich die Position und/oder die Ausrichtung der Kameras korrigiert, sodass die Kameras möglichst exakt über den Pflanzenreihen angeordnet sind und eine zuverlässige Erkennung der Pflanzenreihen ermöglicht wird.

In einer Weiterbildung der landwirtschaftlichen Anbaumaschine ist die elektronische Datenverarbeitungseinrichtung dazu eingerichtet, die Korrekturdaten zum Korrigieren der Position und/oder der Ausrichtung der Arbeitswerkzeuge aus der Neigung der Anbaumaschine, insbesondere aus der Neigung um die Längsachse in Fahrtrichtung der Anbaumaschine und/oder aus der Neigung um die Querachse quer zur Fahrtrichtung der Anbaumaschine, abzuleiten. Vorzugsweise ist die Datenverarbeitungseinrichtung dazu eingerichtet, die Korrekturdaten aus den erfassten Sensordaten und/oder aus den erfassten Bilddaten abzuleiten. Alternativ oder zusätzlich kann die Datenverarbeitungseinrichtung dazu eingerichtet sein, zunächst die Neigung der Anbaumaschine um ihre X-Achse und/oder um ihre Y-Achse abzuleiten, um anschließend die Korrekturdaten aus den abgeleiteten Neigungen abzuleiten. Zum Ableiten der Korrekturdaten werden somit sowohl die Neigung der Anbaumaschine um ihre Längsachse als auch die Neigung der Anbaumaschine um ihre Querachse berücksichtigt. Durch die daraus resultierende Mehrdimensionalität der Korrekturdaten mit Berücksichtigung der Neigung der Anbaumaschine um mehrere ihrer Achsen wird das Korrigieren der Position und/oder der Ausrichtung der Arbeitswerkzeuge mittels des Verschieberahmens deutlich präziser und zuverlässiger.

Im Stand der Technik werden die Position und/oder die Ausrichtung der Arbeitswerkzeuge entweder manuell korrigiert, beispielsweise durch manuelles Vorgeben der Korrekturdaten durch einen Bediener der Anbaumaschine, wobei die Korrekturdaten nur die eindimensionale Neigung der Anbaumaschine um eine Achse berücksichtigen, oder es werden händische Korrekturen der Arbeitswerkzeuge durch den Bediener ohne die Unterstützung von Korrekturdaten vorgenommen. Manuelles Korrigieren sowie Korrekturdaten auf Grundlage von der Neigung um nur eine Achse der Anbaumaschine führt zu einer unpräzisen Korrektur der Position und/oder der Ausrichtung der Arbeitswerkzeuge, wodurch die Arbeitsqualität der Anbaumaschine, insbesondere bei Bodenbearbeitungs- oder Pflegevorgängen auf einer Nutzfläche mit starker Hangneigung, stark beeinträchtigt wird. Vorzugsweise werden die Korrekturdaten mittels der Datenverarbeitungseinrichtung mittels einer Berechnungsroutine und/oder mittels einer Bildanalyse aus den Sensordaten und/oder den Bilddaten und/oder aus den daraus abgeleiteten Neigungen der Anbaumaschine ermittelt.

Es ist weiterhin eine erfindungsgemäße landwirtschaftliche Anbaumaschine besonders vorteilhaft, bei welcher die elektronische Datenverarbeitungseinrichtung dazu eingerichtet ist, die Korrekturdaten zum Korrigieren der Position und/oder der Ausrichtung der Arbeitswerkzeuge auf Grundlage von hinterlegten Referenzdaten abzuleiten, wobei die elektronische Datenverarbeitungseinrichtung vorzugsweise dazu eingerichtet ist, die Korrekturdaten durch einen Vergleich der Neigung der Anbaumaschine mit den hinterlegten Referenzdaten abzuleiten. Die hinterlegten Referenzdaten sind vorzugsweise auf einem Datenspeicher der Anbaumaschine und/oder des Zug- oder Trägerfahrzeugs, insbesondere auf einem Datenspeicher der Datenverarbeitungseinrichtung, hinterlegt. Die Referenzdaten können zudem auf einem externen Datenspeicher, beispielsweise auf einem externen Server oder einer externen Datenbank hinterlegt sein, und von der Datenverarbeitungseinrichtung abgerufen werden, beispielsweise per Mobilfunk. Die hinterlegten Referenzdaten können vorzugsweise manuell von einem Bediener hinterlegt und/oder nachträglich angepasst, insbesondere korrigiert, werden. Die hinterlegten Referenzdaten können zudem während eines Bearbeitungs- oder Pflegevorgangs mittels der Anbaumaschine automatisch ermittelt werden und/oder während eines Bearbeitungs- oder Pflegevorgangs manuell von einem Bediener und/oder automatisch durch die Datenverarbeitungseinrichtung angepasst, insbesondere korrigiert, werden.

Die hinterlegten Referenzdaten können nutzflächenspezifische und/oder maschinenspezifische Referenzdaten sein, welche beispielsweise Informationen zu der Beschaffenheit der Nutzfläche, beispielsweise die Hangneigung oder Bodenverhältnisse der Nutzfläche, und/oder Informationen zu dem verwendeten Maschinentyp der Anbaumaschine berücksichtigen, beispielsweise die Geometrie der Anbaumaschine. Vorzugsweise ist die Datenverarbeitungseinrichtung dazu eingerichtet, die Referenzdaten auszulesen und/oder die Sensordaten des Neigungssensors und/oder die Bilddaten der Kamera und/oder die aus den Sensordaten und/oder den Bilddaten abgeleitete Neigung der Anbaumaschine mit den Referenzdaten zu vergleichen.

Vorzugsweise umfassen die hinterlegten Referenzdaten mehrere Referenzwerte, wobei jeweils einem oder mehreren Referenzwerten jeweils spezifische Korrekturdaten zugeordnet sein können. Vorzugsweise sind die Referenzwerte Neigungswerte, wobei jeder Referenzwert einer Neigung in Grad entspricht.

Insbesondere enthalten die Referenzwerte Neigungswerte für die Neigung um die Y-Achse der Anbaumaschine und Neigungswerte für die Neigung um die X-Achse der Anbaumaschine. Vorzugsweise vergleicht die Datenverarbeitungseinrichtung eine abgeleitete Neigung der Anbaumaschine mit den in den Referenzdaten hinterlegten Neigungen, wobei den in den hinterlegten Referenzdaten hinterlegten Neigungen neigungsspezifische Korrekturdaten zugeordnet sind und die Datenverarbeitungseinrichtung auf Grundlage der Neigung der Anbaumaschine durch den Vergleich mit den Neigungen in den Referenzdaten die notwendigen Korrekturdaten auswählt.

Es ist außerdem eine erfindungsgemäße landwirtschaftliche Anbaumaschine besonders bevorzugt, bei welcher die hinterlegten Referenzdaten Neigungsreferenzwerte für die Neigung um die Längsachse in Fahrtrichtung der Anbaumaschine und/oder Neigungsreferenzwerte für die Neigung um die Querachse quer zur Fahrtrichtung der Anbaumaschine umfassen, wobei die elektronische Datenverarbeitungseinrichtung vorzugsweise dazu eingerichtet ist, die Korrekturdaten durch einen Vergleich der Neigung um die Längsachse in Fahrtrichtung der Anbaumaschine mit den Neigungsreferenzwerten für die Neigung um die Längsachse in Fahrtrichtung der Anbaumaschine und/oder der Neigung um die Querachse quer zur Fahrtrichtung der Anbaumaschine mit den Neigungsreferenzwerten für die Neigung um die Querachse quer zur Fahrtrichtung der Anbaumaschine abzuleiten.

Alternativ oder zusätzlich ist die elektronische Datenverarbeitungseinrichtung dazu eingerichtet, die Neigung um die Längsachse in Fahrtrichtung der Anbaumaschine einem Neigungsreferenzwert für die Neigung um die Längsachse in Fahrtrichtung der Anbaumaschine und/oder die Neigung um die Querachse quer zur Fahrtrichtung der Anbaumaschine einem Neigungsreferenzwert für die Neigung um die Querachse quer zur Fahrtrichtung der Anbaumaschine zuzuordnen.

Alternativ oder zusätzlich ist die elektronische Datenverarbeitungseinrichtung dazu eingerichtet, durch das Zuordnen der Neigung um die Längsachse in Fahrtrichtung der Anbaumaschine zu dem Neigungsreferenzwert für die Neigung um die Längsachse in Fahrtrichtung der Anbaumaschine und/oder der Neigung um die Querachse quer zur Fahrtrichtung der Anbaumaschine zu dem Neigungsreferenzwert für die Neigung um die Querachse quer zur Fahrtrichtung der Anbaumaschine die Korrekturdaten, insbesondere einen Korrekturwert, zum Korrigieren der Position und/oder der Ausrichtung auszuwählen und/oder zu berechnen.

Vorzugsweise umfassen die Referenzdaten mehrere Sätze von Korrekturdaten, wobei jedem Korrekturdatensatz je ein Wert für eine Neigung um die X-Achse und ein Wert für eine Neigung um die Y-Achse der Anbaumaschine zugeordnet ist. Vorzugsweise sind die Korrekturdaten in einem Datenspeicher der Datenverarbeitungseinrichtung gespeichert, insbesondere in demselben Datenspeicher, wie die Referenzdaten. Vorzugsweise bilden die hinterlegten Referenzdaten und die Korrekturdaten einen gemeinsamen Datensatz, wobei der Datensatz insbesondere tabellenförmig und/oder als Kennfeld vorliegt. Aus dem tabellenförmigen Datensatz und/oder dem Kennfeld kann die Datenverarbeitungseinrichtung vorzugsweise über die Neigung um die Y-Achse und die Neigung um die X-Achse die notwendigen Korrekturdaten für die entsprechende Neigungskombination auswählen. Das Kennfeld und/oder die Tabelle ist folglich als mehrdimensionales Kennfeld und/oder als mehrdimensionale Tabelle mit X-Komponente und Y-Komponente ausgebildet.

Die Datenverarbeitungseinrichtung ist vorzugsweise dazu eingerichtet, die Y-Neigung der Anbaumaschine mit einem Y-Referenzwert aus dem Kennfeld und die X-Neigung der Anbaumaschine mit einem X-Referenzwert aus dem Kennfeld zu vergleichen und die sich daraus ergebenden Korrekturdaten auszuwählen. Vorzugsweise unterscheiden sich die Referenzdaten und/oder die Korrekturdaten für Bergauffahren und Bergabfahrten der Anbaumaschine, da die auf die Anbaumaschine und/oder das Zug- oder Trägerfahrzeug wirkenden Hangabtriebskräfte bei Fahrten der Anbaumaschine am Hang auf Nutzflächen unterschiedlich groß sein können, wobei die Datenverarbeitungseinrichtung vorzugsweise dazu eingerichtet ist, Bergauffahrten von Bergabfahrten der Anbaumaschine zu unterscheiden und darauf basierend die jeweils korrekten Referenzdaten und/oder Korrekturdaten auszuwählen. Zum Ermitteln, ob eine Bergauffahrt oder eine Bergabfahrt vorliegt, können beispielsweise GPS-Sensoren und/oder Kartendaten der Nutzfläche verwendet werden, insbesondere ein Vergleich der aktuellen Geoposition der Anbaumaschine mit Kartendaten der Nutzfläche, welche Informationen zu den Neigungen und/oder Hanglagen der Nutzfläche umfassen.

Die Datenverarbeitungseinrichtung ist vorzugsweise dazu eingerichtet, eine aktuell vorliegende Neigung um die X-Achse der Anbaumaschine einem X-Referenzwert der Referenzdaten und eine aktuell vorliegende Neigung um die Y-Achse der Anbaumaschine einem Y-Referenzwert der Referenzdaten zuzuordnen, wobei jeder XY-Referenzwertkombination ein spezifischer Satz an Korrekturdaten zugeordnet ist, welchen die Datenverarbeitungseinrichtung durch das Zuordnen auswählen kann. Die Datenverarbeitungseinrichtung ist folglich vorzugsweise dazu eingerichtet, aus zwei Eingangswerten und/oder zwei Eingangsdatensätzen einen Ausgangswert und/oder einen Ausgangsdatensatz abzuleiten, wobei die zwei Eingangswerte und/oder Eingangsdatensätze die Neigung der Anbaumaschine um ihre X-Achse und um ihre Y-Achse umfassen und der Ausgangswert und/oder der Ausgangsdatensatz die zu den Eingangswerten korrespondierenden Korrekturdaten und/oder zu den Eingangswerten korrespondierende Korrekturwerte umfassen. Alternativ oder zusätzlich zu einem Vergleich und/oder einem Zuordnen von Neigungsdaten, Referenzdaten und/oder Korrekturdaten kann die Datenverarbeitungseinrichtung dazu eingerichtet sein, die Korrekturdaten durch Ausführen einer Berechnungsroutine zu berechnen, insbesondere auf Grundlage von den erfassten Neigungen in Y-Richtung und X-Richtung der Anbaumaschine und/oder direkt aus den Sensordaten und/oder den Bilddaten.

In einer anderen bevorzugten Ausführungsform der erfindungsgemäßen landwirtschaftlichen Anbaumaschine ist die sensorische Erfassungseinrichtung als Beschleunigungssensor und/oder als Gyroskop ausgebildet, wobei die sensorische Erfassungseinrichtung dazu eingerichtet ist, die Lage und/oder die Ausrichtung und/oder Richtungsänderungen der Anbaumaschine betreffende Sensordaten zu erfassen, wobei die elektronische Datenverarbeitungseinrichtung vorzugsweise dazu eingerichtet ist, aus den die Lage und/oder die Ausrichtung und/oder Richtungsänderung der Anbaumaschine betreffenden Sensordaten die Lage und/oder die Ausrichtung und/oder Richtungsänderung der Anbaumaschine, vorzugsweise in Bezug auf ein Referenzobjekt, abzuleiten.

Das Referenzobjekt ist vorzugsweise das Zug- oder Trägerfahrzeug für die Anbaumaschine, insbesondere ein Referenzpunkt und/oder ein Referenzbereich des Zug- oder Trägerfahrzeugs. Das Zug- oder Trägerfahrzeug gibt vorzugsweise einen beabsichtigten Fahrweg für die Anbaumaschine vor, insbesondere entlang eines beabsichtigten Bewegungspfads des Zug- oder Trägerfahrzeugs und/oder der Anbaumaschine. Rutscht die Anbaumaschine während eines Bearbeitungs- oder Pflegevorgangs auf einer Nutzfläche aufgrund einer Hangneigung der Nutzfläche in Bezug auf das Zug- oder Trägerfahrzeug ab, insbesondere von dem beabsichtigten Fahrweg und/oder dem beabsichtigten Bewegungspfad, verändert sich die Lage und/oder die Ausrichtung der Anbaumaschine gegenüber ihres Zug- oder Trägerfahrzeugs, woraus insbesondere eine Änderung des Winkels zwischen der Längsachse der Anbaumaschine und der Fahrtrichtung des Zug- oder Trägerfahrzeugs und somit eine Winkeländerung zwischen der Längserstreckung der Anbaumaschine und der Längserstreckung des Zug- oder Trägerfahrzeugs resultiert. Vorzugsweise ist diese Winkeländerung durch die zumindest eine sensorische Erfassungseinrichtung an der Anbaumaschine und/oder an dem Zug- oder Trägerfahrzeug erfassbar, insbesondere mittels eines Beschleunigungssensors und/oder mittels eines Gyroskops, sodass die Lage, Ausrichtung und/oder Richtungsänderung der Anbaumaschine, insbesondere in Bezug auf das Zug- oder Trägerfahrzeug der Anbaumaschine, erfassbar ist.

Ein Gyroskop ist vorzugsweise dazu eingerichtet, die Lage und/oder die Ausrichtung der Anbaumaschine um mehrere Achsen, insbesondere um die Längsachse und/oder die Querachse der Anbaumaschine, zu erfassen. Mittels des Gyroskops wird folglich vorzugsweise eine mehrdimensionale Erfassung der Lage und/oder der Ausrichtung der Anbaumaschine ermöglicht. Vorzugsweise ist das Gyroskop zudem dazu eingerichtet, die Rotation der Anbaumaschine und/oder die Beschleunigung der Anbaumaschine um mehrere Achsen der Anbaumaschine zu erfassen. Ein sich zwischen der Anbaumaschine und dem Zug- oder Trägerfahrzeug durch ein Abrutschen der Anbaumaschine am Hang ergebender Winkel, insbesondere ein Winkel zwischen der Längserstreckung der Anbaumaschine und der Fahrtrichtung des Zug- oder Trägerfahrzeugs, wird auch als Schwimmwinkel bezeichnet.

Vorzugsweise ist die Datenverarbeitungseinrichtung dazu eingerichtet, den Schwimmwinkel aus den Sensordaten des Gyroskops und/oder des Beschleunigungssensors abzuleiten, insbesondere zu berechnen. Das Gyroskop und/oder der Beschleunigungssensor ist vorzugsweise signalleitend mit der Datenverarbeitungseinrichtung zum Übertragen der Sensordaten verbunden, insbesondere per ISOBUS. Um den Schwimmwinkel zu erfassen, kann zudem ein sogenannter Correvit-S-HR-Sensor eingesetzt werden. Vorzugsweise ist die Datenverarbeitungseinrichtung dazu eingerichtet, aus den Sensordaten des Gyroskops und/oder aus dem abgeleiteten Schwimmwinkel und/oder aus den Sensordaten des Beschleunigungssensors die Korrekturdaten abzuleiten, insbesondere zu berechnen.

Vorzugsweise werden der Schwimmwinkel und/oder die Korrekturdaten fortlaufend in kurzen Zeitabständen, beispielsweise alle 100 ms, neu abgeleitet und/oder berechnet. Vorzugsweise sind die Geometrie der Anbaumaschine und/oder des Zug- oder Trägerfahrzeugs mittels der Datenverarbeitungseinrichtung abrufbar, beispielsweise von einer externen Datenbank, und/oder auf der Datenverarbeitungseinrichtung, insbesondere einem Datenspeicher der Datenverarbeitungseinrichtung, hinterlegt. Zum Ableiten des Schwimmwinkels und/oder der Korrekturdaten mittels der Datenverarbeitungseinrichtung wird vorzugsweise die Geometrie der Anbaumaschine und/oder des Zug- oder Trägerfahrzeugs berücksichtigt.

In einer Weiterbildung der erfindungsgemäßen landwirtschaftlichen Anbaumaschine ist die sensorische Erfassungseinrichtung Bestandteil einer Kamera, welche dazu eingerichtet ist, die Lage und/oder die Ausrichtung und/oder Richtungsänderung der Anbaumaschine betreffende Bilddaten zu erfassen, wobei die elektronische Datenverarbeitungseinrichtung vorzugsweise dazu eingerichtet ist, aus den die Lage und/oder die Ausrichtung und/oder Richtungsänderung der Anbaumaschine betreffenden Bilddaten die Lage und/oder die Ausrichtung und/oder Richtungsänderung der Anbaumaschine, vorzugsweise in Bezug auf ein Referenzobjekt, abzuleiten.

Alternativ oder zusätzlich zu einem Gyroskop und/oder einem Beschleunigungssensor kann die Lage und/oder Ausrichtung, insbesondere der Schwimmwinkel zwischen Anbaumaschine und Zug- oder Trägerfahrzeug, optisch erfasst werden, beispielsweise mittels einer oder mehrerer Kameras. Die durch die als Kamera ausgebildete Erfassungseinrichtung erfassten Bilddaten werden vorzugsweise zum Auswerten an die Datenverarbeitungseinrichtung, insbesondere per ISOBUS, übertragen, wobei die Datenverarbeitungseinrichtung die Bilddaten zum Ableiten der Lage und/oder Ausrichtung der Anbaumaschine, insbesondere um mehrere Achsen der Anbaumaschine, auswertet. Beispielsweise können zum Erfassen der Bilddaten zum Ableiten der Lage und/oder Ausrichtung der Anbaumaschine die Kameras des Reihenführungssystems der Anbaumaschine genutzt werden, mittels welcher normalerweise die Pflanzenreihen auf der Nutzfläche, insbesondere zum Bestimmen des Abstands der Arbeitswerkzeuge zu den Pflanzenreihen, erfasst werden.

Die Datenverarbeitungseinrichtung ist vorzugsweise dazu eingerichtet, eine Bildauswertung der Bilddaten auszuführen, insbesondere zum Bestimmen des Schwimmwinkels zwischen der Anbaumaschine und dem Zug- oder Trägerfahrzeug. Der Schwimmwinkel kann beispielsweise durch Erfassen des Winkels einer oder mehrerer Pflanzenreihen auf der Nutzfläche in Bezug auf die Bildachse der einen oder der mehreren Kameras bestimmt werden. Vorzugsweise kommen zwei oder mehr Kameras zum Einsatz, wobei die Bilddaten der zwei oder der mehreren Kameras vorzugsweise gemeinsam ein 3D-Bild ergeben.

Es ist zudem eine erfindungsgemäße landwirtschaftliche Anbaumaschine vorteilhaft, bei welcher die elektronische Datenverarbeitungseinrichtung dazu eingerichtet ist, die Korrekturdaten zum Korrigieren der Position und/oder der Ausrichtung der Arbeitswerkzeuge aus der Lage und/oder Ausrichtung und/oder Richtungsänderung der Anbaumaschine, vorzugsweise in Bezug auf ein Referenzobjekt, abzuleiten, wobei die elektronische Datenverarbeitungseinrichtung vorzugsweise dazu eingerichtet ist, die Korrekturdaten unter Anwendung einer Berechnungsroutine auf Grundlage der Lage und/oder Ausrichtung und/oder Richtungsänderung der Anbaumaschine und/oder auf Grundlage der Geometrie der Anbaumaschine zu berechnen. Vorzugsweise ist die Datenverarbeitungseinrichtung dazu eingerichtet, die Korrekturdaten aus den Sensordaten und/oder aus den Bilddaten abzuleiten. Alternativ oder zusätzlich leitet die Datenverarbeitungseinrichtung zunächst den Schwimmwinkel ab und anschließend die Korrekturdaten aus dem abgeleiteten Schwimmwinkel. Vorzugsweise werden die Korrekturdaten mittels der Datenverarbeitungseinrichtung mittels einer Berechnungsroutine und/oder mittels einer Bildanalyse aus den Sensordaten und/oder den Bilddaten und/oder aus dem jeweils daraus abgeleiteten Schwimmwinkel der Anbaumaschine und/oder der Geometrie der Anbaumaschine ermittelt. Vorzugsweise wird dabei ebenfalls die Geometrie des Zug- oder Trägerfahrzeugs berücksichtigt. Insbesondere werden die Korrekturdaten mittels einer Berechnungsroutine, welche den Schwimmwinkel und die Geometrie der Anbaumaschine berücksichtigt, berechnet. Ein Korrekturwert kann beispielsweise berechnet werden, indem der Tangens des Schwimmwinkels berechnet wird und das Ergebnis mit dem Abstand des Messpunkts für den Schwimmwinkel zum Arbeitswerkzeug, insbesondere mit dem Längsabstand, multipliziert wird.

Es ist weiterhin eine erfindungsgemäße landwirtschaftliche Anbaumaschine bevorzugt, welche eine elektronische Steuerungseinrichtung umfasst, welche dazu eingerichtet ist, das Verfahren der Arbeitswerkzeuge zum Korrigieren der Position und/oder der Auswertung der Arbeitswerkzeuge mittels des Verschieberahmens auf Grundlage der mittels der elektronischen Datenverarbeitungseinrichtung abgeleiteten Korrekturdaten zu steuern, wobei die Korrekturdaten vorzugsweise Steuerungsvorgaben für die Steuerungseinrichtung zum Steuern des Verfahrens der Arbeitswerkzeuge umfassen, wobei die Steuerungsvorgaben insbesondere Informationen zu einem für das Korrigieren der Position und/oder der Ausrichtung der Arbeitswerkzeuge auszuführenden Verfahrwegs des Verschieberahmens enthalten.

Vorzugsweise ist der Verschieberahmen quer zur Fahrtrichtung der Anbaumaschine und/oder quer zur Längserstreckung der Anbaumaschine in zwei Richtungen verfahrbar. Vorzugsweise umfassen die Korrekturdaten Offsetwerte und/oder sind die Korrekturdaten als Offsetwerte ausgebildet, wobei ein Offsetwert vorzugsweise angibt, um welchen Verfahrweg, beispielsweise um wie viele Zentimeter, und in welche Richtung der Verschieberahmen verfahren werden muss. Vorzugsweise ist die Steuerungseinrichtung Bestandteil eines Reihenführungssystems der landwirtschaftlichen Anbaumaschine. Die Steuerungseinrichtung ist vorzugsweise dazu eingerichtet, ein Proportionalventil zum Verfahren der Arbeitswerkzeuge mittels des Verschieberahmens auf Grundlage der Steuerungsvorgaben und/oder auf Grundlage der erfassten Korrekturdaten anzusteuern. Die Steuerungseinrichtung kann an der Anbaumaschine angeordnet sein und/oder Bestandteil eines Bedienterminals für die Anbaumaschine und/oder das Zug- oder Trägerfahrzeug sein. Vorzugsweise sind die zumindest eine Erfassungseinrichtung und/oder die Datenverarbeitungseinrichtung und/oder die Steuerungseinrichtung signalleitend per ISOBUS miteinander, um Sensordaten und/oder Bilddaten und/oder Korrekturdaten und/oder Steuerungsvorgaben untereinander auszutauschen.

Es ist ferner eine erfindungsgemäße landwirtschaftliche Anbaumaschine vorteilhaft, bei welcher das Korrigieren der Position und/oder der Ausrichtung der Arbeitswerkzeuge das Verändern der Position und/oder der Ausrichtung der Arbeitswerkzeuge in Bezug auf Nutzpflanzen auf der landwirtschaftlichen Nutzfläche, insbesondere das Verändern des Abstands der Arbeitswerkzeuge zu Pflanzenreihen auf der landwirtschaftlichen Nutzfläche, betrifft. Durch das Korrigieren wird sichergestellt, dass die Arbeitswerkzeuge stets in einem beabsichtigten Abstand und/oder in einem beabsichtigten Winkel zu den Nutzpflanzen auf der Nutzfläche eingestellt sind, auch dann, wenn äußere Einflüsse, insbesondere die Hangneigung der Nutzfläche, zu einem Abrutschen und/oder Abdriften der Anbaumaschine führen.

Bei Nutzpflanzen, welche in Pflanzenreihen kultiviert werden, sollen Hackmesser beispielsweise stets möglichst mittig zwischen den Pflanzenreihen laufen, sodass die Pflanzen durch die Arbeitswerkzeuge, insbesondere die Hackmesser, nicht beschädigt werden. Bei Feldspritzen sollen die Spritzdüsen beispielsweise möglichst exakt über den Pflanzenreihen laufen, um die Spritzflüssigkeit möglichst exakt auf die Pflanzen applizieren zu können, sodass ein beabsichtigtes Spritzbild realisiert werden kann. Zudem sollen die Kameras des Reihenführungssystems der Anbaumaschine in einem beabsichtigten Winkel zu den Pflanzenreihen angeordnet sein, insbesondere möglichst exakt über den Pflanzenreihen, sodass die Erkennung der Pflanzen und/oder das Erfassen der Position und/oder Ausrichtung der Arbeitswerkzeuge möglichst präzise ist.

Die der Erfindung zugrundeliegende Aufgabe wird weiterhin durch ein Verfahren zum Einstellen der eingangs genannten Art gelöst, wobei im Rahmen des erfindungsgemäßen Verfahrens Korrekturdaten zum Korrigieren der Position und/oder der Ausrichtung der Arbeitswerkzeuge mittels des Verschieberahmens aus dem aktuellen Maschinenzustand der Anbaumaschine mittels einer elektronischen Datenverarbeitungseinrichtung abgeleitet werden.

Vorzugsweise wird im Rahmen des erfindungsgemäßen Verfahrens zum Einstellen eine landwirtschaftliche Anbaumaschine nach einer der vorstehenden Ausführungsformen eingestellt. Hinsichtlich der Vorteile und Modifikationen des erfindungsgemäßen Verfahrens wird folglich auf die Vorteile und Modifikationen der erfindungsgemäßen landwirtschaftlichen Anbaumaschine verwiesen.

Nachfolgend werden bevorzugte Ausführungsformen der Erfindung unter Bezugnahme auf die beiliegenden Zeichnungen näher erläutert und beschrieben. Dabei zeigen:
- Fig. 1: eine von einem Trägerfahrzeug getragene erfindungsgemäße landwirtschaftliche Anbaumaschine während eines Bearbeitungsvorgangs auf einer landwirtschaftlichen Nutzfläche in einer perspektivischen Ansicht;
- Fig. 2: eine schematische Darstellung einer in Bezug auf ihr Trägerfahrzeug auf einer geneigten Nutzfläche abrutschenden erfindungsgemäßen landwirtschaftlichen Anbaumaschine in einer Ansicht von hinten;
- Fig. 3: eine in Bezug auf ihr Trägerfahrzeug auf einer geneigten Nutzfläche abrutschende erfindungsgemäße landwirtschaftliche Anbaumaschine ohne korrigierte Position und/oder Ausrichtung von Arbeitswerkzeugen der Anbaumaschine in einer schematischen Darstellung von oben; und
- Fig. 4: die an der geneigten Nutzfläche abrutschende Anbaumaschine aus Fig. 3 mit korrigierter Position und/oder Ausrichtung der Arbeitswerkzeuge in einer schematischen Darstellung von oben.

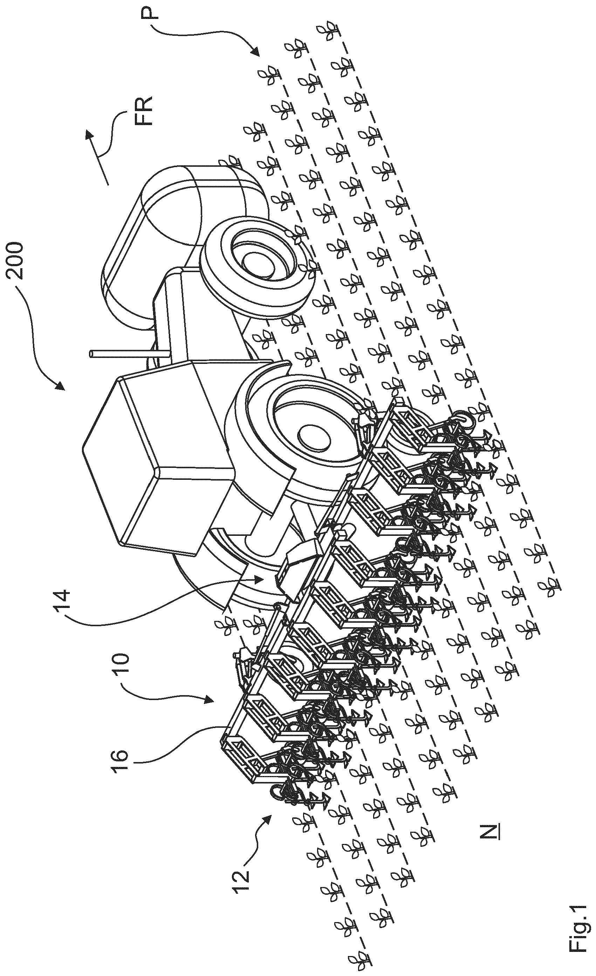

Die Fig. 1 zeigt eine erfindungsgemäße landwirtschaftliche Anbaumaschine 10, welche als landwirtschaftliche Hacke ausgebildet ist. Insbesondere ist die landwirtschaftliche Anbaumaschine 10 als getragene Hacke ausgebildet, welche von einem Trägerfahrzeug 200, welches als Schlepper ausgebildet ist, getragen wird. Die landwirtschaftliche Anbaumaschine 10 ist in der Fig. 1 während eines Bodenbearbeitungs- und/oder Pflanzenpflegevorgangs auf einer landwirtschaftlichen Nutzfläche N dargestellt. Während des Bodenbearbeitungs- und/oder Pflanzenpflegevorgangs bewegt sich die landwirtschaftliche Anbaumaschine 10 in einer von dem Trägerfahrzeug 200 vorgegebenen Fahrtrichtung FR über die Nutzfläche N, wobei auf der landwirtschaftlichen Nutzfläche N in Pflanzenreihen P angeordnete Nutzpflanzen kultiviert sind. Es ist beabsichtigt, dass sich das Trägerfahrzeug 200 für die Anbaumaschine 10 und die Anbaumaschine 10 gemeinsam in einer beabsichtigten Fahrtrichtung FR bewegen, welche parallel zu der Erstreckung der Pflanzenreihen P auf der Nutzfläche N verläuft.

Die als landwirtschaftliche Hacke ausgebildete landwirtschaftliche Anbaumaschine 10 umfasst mehrere Arbeitswerkzeuge 12, welche nebeneinander und beabstandet voneinander gleichmäßig verteilt an einem sich quer zur Fahrtrichtung FR der Anbaumaschine 10 erstreckenden Trägerbalken 16 der Anbaumaschine 10 befestigt sind. Es ist beabsichtigt, dass die Arbeitswerkzeuge 12 jeweils zwischen den Pflanzenreihen P angeordnet sind, um den jeweils zwischen den Pflanzenreihen P liegenden Bereich der Nutzfläche N zu bearbeiten. Bei einer landwirtschaftlichen Hacke sind die Arbeitswerkzeuge 12 als Hackwerkzeuge, beispielsweise als Hackmesser, ausgebildet. Mittels der Hackwerkzeuge wird die Nutzfläche N zwischen den Pflanzenreihen P insbesondere zur Unkrautbekämpfung bearbeitet. Es ist erforderlich, dass die Arbeitswerkzeuge 12 während eines Bodenbearbeitungs- und/oder Pflanzenpflegevorgangs mittels der Anbaumaschine 10 stets so zwischen den Pflanzenreihen P laufen, dass die Nutzpflanzen in den Pflanzenreihen P nicht durch die Arbeitswerkzeuge 12 beschädigt werden.

Um die Position und/oder Ausrichtung der Arbeitswerkzeuge 12 derart anpassen zu können, dass die Arbeitswerkzeuge 12 in einer beabsichtigten Position und/oder Ausrichtung, insbesondere zwischen den Pflanzenreihen P, angeordnet sind, umfasst die landwirtschaftliche Anbaumaschine 10 einen Verschieberahmen 14, mittels welchem die Arbeitswerkzeuge 12, insbesondere gemeinsam, quer zur Fahrtrichtung FR der Anbaumaschine 10 verfahrbar sind. Mittels des Verschieberahmens 14 kann folglich eine Reihenführung der Arbeitswerkzeuge 12 realisiert werden, mittels welcher sichergestellt werden soll, dass die Arbeitswerkzeuge 12 zuverlässig zwischen den Pflanzenreihen P laufen und somit keine Nutzpflanzen beschädigt werden.

Anders als in der Fig. 1 dargestellt, kann die landwirtschaftliche Anbaumaschine 10 statt als landwirtschaftliche Hacke auch als landwirtschaftliche Feldspritze ausgebildet sein, wobei die Arbeitswerkzeuge 12 bei einer landwirtschaftlichen Feldspritze insbesondere als Spritzdüsen zum Applizieren einer Spritzflüssigkeit auf den Nutzfläche N, insbesondere auf die Pflanzen in den Pflanzenreihen P, ausgebildet sein können. Bei einer landwirtschaftlichen Feldspritze ist es beabsichtigt, dass die als Spritzdüsen ausgebildeten Arbeitswerkzeuge 12 stets in einer beabsichtigten Position und/oder Ausrichtung zu den Pflanzenreihen P, insbesondere in einer Positionierung direkt über den Pflanzenreihen P, angeordnet sind, um ein beabsichtigtes Spritzbild zu erzeugen, sodass die Pflanzenreihen P wie beabsichtigt mit Spritzflüssigkeit behandelt werden. Bei einer landwirtschaftlichen Feldspritze werden zu diesem Zweck mehrere oder alle Spritzdüsen mittels des Verschieberahmens 14 quer zur Fahrtrichtung FR der Anbaumaschine 10 so verfahren, dass ein beabsichtigtes Spritzbild mittels der als Spritzdüsen ausgebildeten Arbeitswerkzeuge 12 sichergestellt wird.

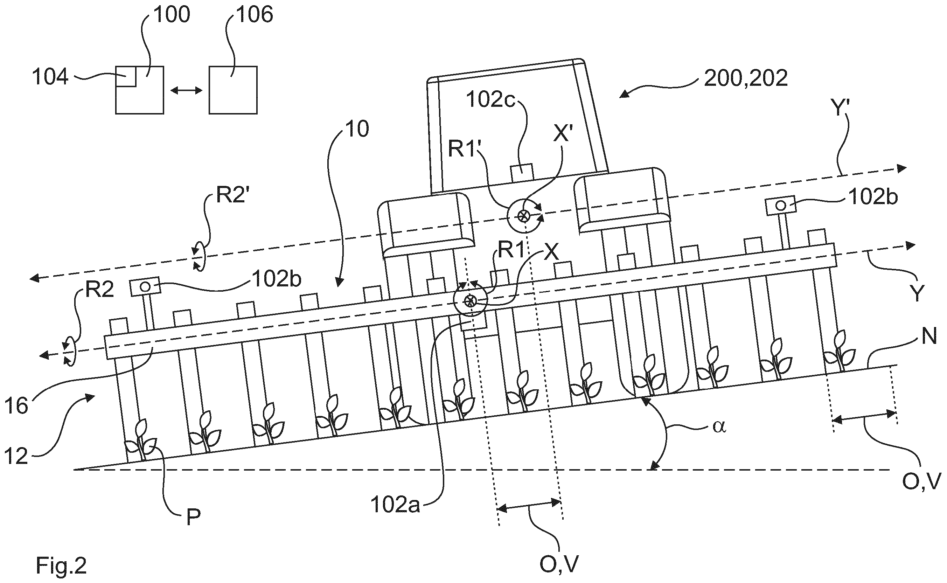

Die Fig. 2 zeigt eine von einem Trägerfahrzeug 200 getragene erfindungsgemäße landwirtschaftliche Anbaumaschine 10 in einer schematischen Darstellung von hinten während eines Bodenbearbeitungs- und/oder Pflanzenpflegevorgangs auf einer geneigten Nutzfläche N. In der Fig. 2 ist somit eine Situation dargestellt, in welcher die Anbaumaschine 10 eine landwirtschaftliche Nutzfläche N mit Hangneigung bearbeitet und/oder pflegt, wobei die Anbaumaschine 10 sowie ihr Trägerfahrzeug 200 durch die Hangneigung der Nutzfläche N mit einer Neigung α geneigt ist. Die Neigung α ist in der Fig. 2 als Neigung α in Querrichtung zur Anbaumaschine 10 dargestellt. Die Neigung α kann abhängig von der Fahrtrichtung FR, beispielsweise bei Fahrten schräg zum Hang der Nutzfläche N, auch aus einer Neigung α in Querrichtung und einer Neigung α in Längsrichtung zusammengesetzt sein.

Die dargestellte landwirtschaftliche Anbaumaschine 10 ist als landwirtschaftliche Hacke ausgebildet und umfasst mehrere quer zur Fahrtrichtung FR der Anbaumaschine 10 an dem Trägerbalken 16 der Anbaumaschine 10 angeordnete und als Hackwerkzeuge ausgebildete Arbeitswerkzeuge 12. Mittels der Arbeitswerkzeuge 12 ist es beabsichtigt, die Nutzfläche N in den Bereichen zwischen den Pflanzenreihen P auf der Nutzfläche N zu bearbeiten, insbesondere zur Unkrautbekämpfung. Durch die Neigung α der Anbaumaschine 10, welche aus der Hangneigung der Nutzfläche N resultiert, kommt es zu einem Abrutschen und/oder Abdriften der landwirtschaftlichen Anbaumaschine 10 um einen Offset O, insbesondere in Bezug auf das Trägerfahrzeug 200.

Durch das Abrutschen der Anbaumaschine 10 hangabwärts an der Hangneigung der Nutzfläche N als Resultat der Neigung α der Anbaumaschine 10 kommt es zu einer unbeabsichtigten Abweichung der Position und/oder Ausrichtung der Arbeitswerkzeuge 12, insbesondere in Bezug auf die Pflanzenreihen P auf der geneigten Nutzfläche N. Durch das Abrutschen der Anbaumaschine 10 rutschen ebenfalls die Arbeitswerkzeuge 12 der Anbaumaschine 10 um den Offset O hangabwärts, sodass nicht wie beabsichtigt die Bereiche der Nutzfläche N zwischen den Pflanzenreihen P durch die Arbeitswerkzeuge 12 bearbeitet werden, sondern zumindest teilweise die Pflanzenreihen P durch unbeabsichtigten Kontakt mit den Arbeitswerkzeugen 12 beschädigt werden.

Um die in der Fig. 2 dargestellte Situation, welche Beschädigungen der Pflanzenreihen P durch Abrutschen der Anbaumaschine 10 am Hang einer Nutzfläche N und die daraus resultierende unbeabsichtigte Abweichung in der Position und/oder Ausrichtung der Anbaumaschine 10, zu vermeiden, ist eine Korrektur der Position und/oder Ausrichtung der Arbeitswerkzeuge 12 der Anbaumaschine 10 notwendig, um den Offset O, welcher aus dem Abrutschen der Anbaumaschine 10 resultiert, derart auszugleichen, dass die Arbeitswerkzeuge 12 wie beabsichtigt zwischen den Pflanzenreihen P laufen und diese nicht weiter beschädigen. Zum Korrigieren der Position und/oder Ausrichtung der Arbeitswerkzeuge 12 umfasst die Anbaumaschine 10 einen in der Fig. 2 nicht dargestellten Verschieberahmen 14, wobei der Trägerbalken 16, an welchem die Arbeitswerkzeuge 12 befestigt sind, derart an dem Verschieberahmen 14 angeordnet ist, dass durch ein Verfahren des Verschieberahmens ein Verfahren der Arbeitswerkzeuge 12, insbesondere quer zur Fahrtrichtung der Anbaumaschine 10, ermöglicht wird.

Die landwirtschaftliche Anbaumaschine 10 umfasst weiterhin eine elektronische Datenverarbeitungseinrichtung 100, wobei die elektronische Datenverarbeitungseinrichtung 100 Korrekturdaten aus einem aktuellen Maschinenzustand der landwirtschaftlichen Anbaumaschine 10 ableitet, wobei die Position und/oder Ausrichtung der Arbeitswerkzeuge 12 mittels des Verschieberahmens 14 auf Grundlage der mittels der elektronischen Datenverarbeitungseinrichtung 100 abgeleiteten Korrekturdaten korrigiert wird. Um den aktuellen Maschinenzustand der Anbaumaschine 10 zu erfassen, sind an der Anbaumaschine 10 und/oder an dem Trägerfahrzeug 200 für die Anbaumaschine 10 Erfassungseinrichtungen 102a bis 102c angeordnet. Mittels der Erfassungseinrichtungen 102a bis 102c, welche beispielsweise als sensorische und/oder optische Erfassungseinrichtungen 102a bis 102c ausgebildet sind, werden den Maschinenzustand der Anbaumaschine 10 betreffende Sensordaten und/oder Bilddaten erfasst, welche mittels der Datenverarbeitungseinrichtung 100 zum Ableiten der Korrekturdaten zum Korrigieren der Position und/oder der Ausrichtung der Arbeitswerkzeuge 12 mittels des Verschieberahmens 14 ausgewertet werden.

In der in der Fig. 2 dargestellten Ausführungsform der Anbaumaschine 10 ist an der Anbaumaschine 10 eine Erfassungseinrichtung 102a, welche insbesondere als Neigungssensor oder als Gyroskop ausgebildet ist, angeordnet. Zudem umfasst die dargestellte Ausführungsform der landwirtschaftlichen Anbaumaschine 10 zwei optische Erfassungseinrichtungen 102b, welche jeweils als Kamera ausgebildet sind und beispielsweise Bestandteil eines Reihenführungssystems, insbesondere eines kamerabasierten Reihenführungssystems, der Anbaumaschine 10 sein können. Zusätzlich zu den Erfassungseinrichtungen 102a, 102b der Anbaumaschine 10 ist in der Fig. 2 zusätzlich eine Erfassungseinrichtung 102c an dem Trägerfahrzeug 200 für die Anbaumaschine 10 angeordnet, welche beispielsweise als Neigungssensor und/oder als Gyroskop ausgebildet sein kann.

Die mittels der elektronischen Datenverarbeitungseinrichtung 100 aus den Sensordaten und/oder Bilddaten zumindest einer der Erfassungseinrichtungen 102a bis 102c abgeleiteten Korrekturdaten betreffen insbesondere das Korrigieren der Position und/oder Ausrichtung der Arbeitswerkzeuge 12 mittels des Verschieberahmens 14 zum Ausgleichen der durch das Abrutschen der Anbaumaschine 10 an der Hangneigung der Nutzfläche N ausgelösten unbeabsichtigten Position und/oder Ausrichtung der Arbeitswerkzeuge 12. Die Korrekturdaten betreffen folglich insbesondere das Verfahren der Arbeitswerkzeuge 12 mittels des Verschieberahmens 14 zum Ausgleichen des durch das Abrutschen der Anbaumaschine 10 ausgelösten Offsets O.

Zum Ableiten der Korrekturdaten mittels der Datenverarbeitungseinrichtung 100 kann die Erfassungseinrichtung 102a beispielsweise als Neigungssensor ausgebildet sein. Die als Neigungssensor ausgebildete Erfassungseinrichtung 102a erfasst in der in der Fig. 2 dargestellten Situation die Neigung α der Anbaumaschine 10 infolge der Hangneigung der Nutzfläche N um die in Fahrtrichtung FR der Anbaumaschine 10 verlaufende Längsachse X der Anbaumaschine 10. Mittels der sensorischen Erfassungseinrichtung 102a ist es zudem möglich, zusätzlich Neigungen α der Anbaumaschine 10 um weitere Achsen der Anbaumaschine 10, insbesondere um die quer zur Fahrtrichtung FR der Anbaumaschine 10 verlaufenden Querachse Y der Anbaumaschine 10, wobei Neigungen α um die Querachse Y und um die Längsachse X der Anbaumaschine 10 beispielsweise bei Fahrten der Anbaumaschine 10 schräg zur Hangneigung einer Nutzfläche N auftreten, woraus eine mehrdimensionale Neigung α der Anbaumaschine 10 resultiert.

Aus den erfassten Sensordaten der Erfassungseinrichtung 102a, welche Neigungen α der Anbaumaschine 10 um ihre Längsachse X und/oder um ihre Querachse Y betreffen, leitet die Datenverarbeitungseinrichtung 100 Korrekturdaten zum Korrigieren der Position und/oder der Ausrichtung der Arbeitswerkzeuge 12 ab, wobei die Korrekturdaten insbesondere einen Verfahrweg V des Verschieberahmens 14 betreffen, wobei der Verfahrweg V insbesondere dem Offset O, um welchen die Anbaumaschine 10 gegenüber ihrer beabsichtigten Stellung, beispielsweise in Bezug auf ihr Trägerfahrzeug 200, entspricht.

Um aus den mittels der Erfassungseinrichtung 102a erfassten Neigungen α der Anbaumaschine 10 um ihre Längsachse X und/oder um ihre Querachse Y die zum Korrigieren notwendigen Korrekturdaten, insbesondere den notwendigen Verfahrweg V für den Verschieberahmen 14, abzuleiten, nutzt die elektronische Datenverarbeitungseinrichtung 100 Referenzdaten, insbesondere Neigungsreferenzdaten für die Neigung α der Anbaumaschine 10 um ihre Längsachse X und/oder ihre Längsachse Y. In der dargestellten Ausführungsform der Anbaumaschine 10 umfasst die Datenverarbeitungseinrichtung 100 einen Datenspeicher 104, in welchem insbesondere ein tabellenförmiges Kennfeld hinterlegt ist, wobei das tabellenförmige Kennfeld Neigungsreferenzwerte für die Neigung α der Anbaumaschine 10 um ihre Längsachse X und um ihre Längsachse Y und einen jeweils dazu passenden Wert für den Verfahrweg V enthält. Die Datenverarbeitungseinrichtung 100 leitet somit aus den Sensordaten der Erfassungseinrichtung 102 eine Neigung α in X-Richtung und eine Neigung α in Y-Richtung der Anbaumaschine 10 ab, ordnet die erfassten Neigungen α der Anbaumaschine 10 jeweils den passenden Neigungsreferenzwerten in X-Richtung und Y-Richtung zu und wählt einen daraus resultierenden Korrekturwert ab, wobei der Korrekturwert insbesondere den Verfahrweg V betrifft.

Insbesondere enthalten die Referenzdaten für jede Kombination aus einer Neigung α um die Längsachse X und die Querachse Y spezifische Korrekturdaten. Die Datenverarbeitungseinrichtung 100 vergleicht die aus den Sensordaten abgeleiteten Neigung α der Anbaumaschine 10 mit den in den Referenzdaten hinterlegten Werten und ordnet die erfasste Neigung α um die Längsachse X einem Neigungsreferenzwert und die erfasste Neigung um die Querachse Y der Anbaumaschine einem weiteren Neigungsreferenzwert in den Referenzdaten zu, wobei die Kombination der ausgewählten Neigungsreferenzwerte einen dazu passenden spezifischen Korrekturdatensatz ergibt, welchen die Datenverarbeitungseinrichtung 100 durch Zuordnen der erfassten Neigung zu den Neigungsreferenzwerten auswählt. Die Datenverarbeitungseinrichtung 100 ist also dazu eingerichtet, zwei Eingangswerte in Form von erfassten Neigungen der Anbaumaschine 10 um zwei verschiedene Achsen der Anbaumaschine 10 zwei korrespondierenden Neigungsreferenzwerten aus den Referenzdaten zuzuordnen und daraus einen passenden Ausgangswert, insbesondere einen daraus folgenden Korrekturdatensatz, auszuwählen.

Dadurch, dass beim Ableiten der Korrekturdaten mittels der Datenverarbeitungseinrichtung 100 die Neigung α der Anbaumaschine 10 um mehrere Achsen der Anbaumaschine 10 berücksichtigt werden, wird ein mehrdimensionaler Neigungszustand der Anbaumaschine 10 zum Korrigieren der Position und/oder der Ausrichtung der Arbeitswerkzeuge 12 mittels des Verschieberahmens 14 berücksichtigt, sodass das Korrigieren insbesondere bei Fahrten der Anbaumaschine 10 schräg zur Hangneigung einer Nutzfläche N und einen daraus resultierenden mehrdimensionalen Neigungszustand der Anbaumaschine 10 deutlich präziser ist, als bei einer Korrektur, welche ausschließlich auf Grundlage der Neigung α um eine Achse, beispielsweise nur um die Neigung α der Längsachse X der Anbaumaschine 10, erfolgt.

Die Erfassungseinrichtung 102a kann zudem als Gyroskop und/oder als Beschleunigungssensor ausgebildet sein, wobei mittels einer als Gyroskop ausgebildeten Erfassungseinrichtung 102 insbesondere eine Rotation R1 der Anbaumaschine 10 um ihre Längsachse X und/oder eine Rotation R2 der Anbaumaschine 10 um ihre Querachse Y erfassbar ist. Die Datenverarbeitungseinrichtung 100 kann dazu eingerichtet sein, aus der Rotation R1 der Anbaumaschine 10 um ihre Längsachse X und/oder aus der Rotation R2 der Anbaumaschine 10 um ihre Querachse Y die Korrekturdaten zum Korrigieren der Position und/oder der Ausrichtung der Arbeitswerkzeuge 12, insbesondere einen zum Korrigieren notwendigen Verfahrweg V, abzuleiten, wobei durch das Berücksichtigen der Rotationen R1 und R2 ebenfalls eine Mehrdimensionalität der Korrekturdaten erreicht wird, welche eine zuverlässigere und präzisere Korrektur der Position und/oder der Ausrichtung der Arbeitswerkzeuge 12 ermöglichen, insbesondere bei mehrdimensionalen Neigungszuständen der Anbaumaschine 10, beispielsweise bei Fahrten schräg zur Hangneigung einer Nutzfläche N.

Alternativ oder zusätzlich zu einer als Neigungssensor und/oder Gyroskop und/oder Beschleunigungssensor ausgebildeten Erfassungseinrichtung 102a kann die Neigung α der Anbaumaschine 10, insbesondere die Neigung α der Anbaumaschine 10 um ihre Längsachse X und/oder um ihre Querachse Y, und/oder die Rotation R1 der Anbaumaschine 10 um ihre Längsachse X und/oder die Rotation R2 der Anbaumaschine 10 um ihre Querachse Y mit als Kameras ausgebildeten Erfassungseinrichtungen 102b ermittelt werden, wobei die Erfassungseinrichtungen 102b Bilddaten erfassen, aus welchen die Datenverarbeitungseinrichtung 100 die Neigungen α der Anbaumaschine 10 um ihre X-Achse und ihre Y-Achse und/oder die Rotationen R1, R2 der Anbaumaschine 10 ableiten und folglich daraus die Korrekturdaten ableiten kann.

Alternativ oder zusätzlich kann eine Erfassungseinrichtung 102c an dem Trägerfahrzeug 200 für die Anbaumaschine 10 angeordnet sein, welche beispielsweise als Neigungssensor, als Gyroskop und/oder als Beschleunigungssensor ausgebildet ist, wobei mittels der Erfassungseinrichtung 102c insbesondere eine Neigung des Trägerfahrzeugs 200 um die Längsachse X' des Trägerfahrzeugs 200 und/oder die Neigung um die Querachse Y' des Trägerfahrzeugs 200 und/oder die Rotation R1' um die Längsachse X' und/oder die Rotation R2' um die Querachse Y' des Trägerfahrzeugs 200 erfasst werden. Ist die Anbaumaschine 10 als getragene Anbaumaschine 10 ausgebildet, entsprechen die Neigungen und/oder Rotationen R1', R2` des Trägerfahrzeugs 200 im Wesentlichen den Neigungen α und/oder Rotationen R1, R2 der getragenen Anbaumaschine 10, sodass die Korrekturdaten mittels der Datenverarbeitungseinrichtung 100 alternativ oder zusätzlich aus den Sensordaten der Erfassungseinrichtung 102c an dem Trägerfahrzeug 200 abgeleitet und/oder diese dabei berücksichtigt werden können.

Die landwirtschaftliche Anbaumaschine 10 umfasst weiterhin eine elektronische Steuerungseinrichtung 106, welche das Korrigieren der Position und/oder der Ausrichtung der Arbeitswerkzeuge 12 mittels des Verschieberahmens 14 auf Grundlage der von der Datenverarbeitungseinrichtung 100 abgeleiteten Korrekturdaten steuert. Insbesondere umfassen die Korrekturdaten der Datenverarbeitungseinrichtung 100 Steuerungsvorgaben für die Steuerungseinrichtung 106, wobei die Steuerungsvorgaben vorgeben, um welchen Verfahrweg V die Arbeitswerkzeuge 12 mittels des Verschieberahmens verfahren werden müssen, um den Offset O durch das Abrutschen der Anbaumaschine 10 am Hang der Nutzfläche N derart auszugleichen, dass die Arbeitswerkzeuge 12 in einer beabsichtigten korrigierten Position und/oder Ausrichtung angeordnet sind und somit auch bei Bodenbearbeitungs- und/oder Pflanzenpflegevorgängen mittels der Anbaumaschine 10 an geneigten Nutzflächen N sichergestellt wird, sodass keine Nutzpflanzen auf der Nutzfläche N durch unbeabsichtigten Kontakt der Arbeitswerkzeuge 12 mit den Pflanzenreihen P beschädigt werden.

Die Datenverarbeitungseinrichtung 100, der Datenspeicher 104, die Steuerungseinrichtung 106 sowie zumindest eine der Erfassungseinrichtungen 102a bis 102c sind vorzugsweise signalleitend per ISOBUS miteinander verbunden, sodass Sensordaten, Bilddaten, Korrekturdaten und/oder Steuerungsvorgaben übertragen werden können. Die Steuerungseinrichtung 106, die Datenverarbeitungseinrichtung 100 und/oder der Datenspeicher 104 sind vorzugsweise Bestandteil eines Bedienterminals für die Anbaumaschine 10 und/oder das Trägerfahrzeug 200, wobei die Datenverarbeitungseinrichtung 100, der Datenspeicher 104 und/oder die Steuerungseinrichtung 106 am Trägerfahrzeug 200 und/oder an der Anbaumaschine 100 angeordnet sein können.

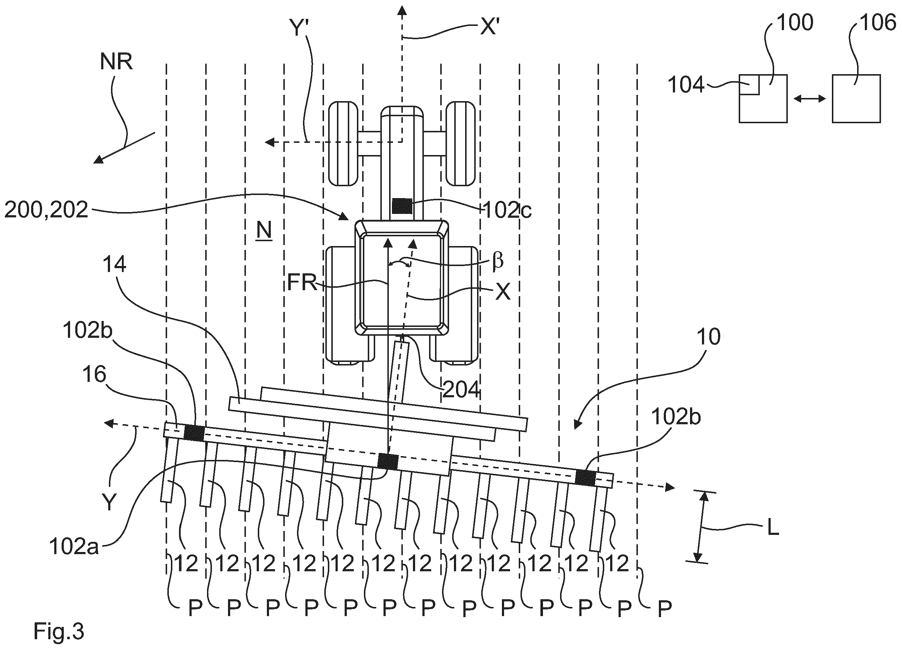

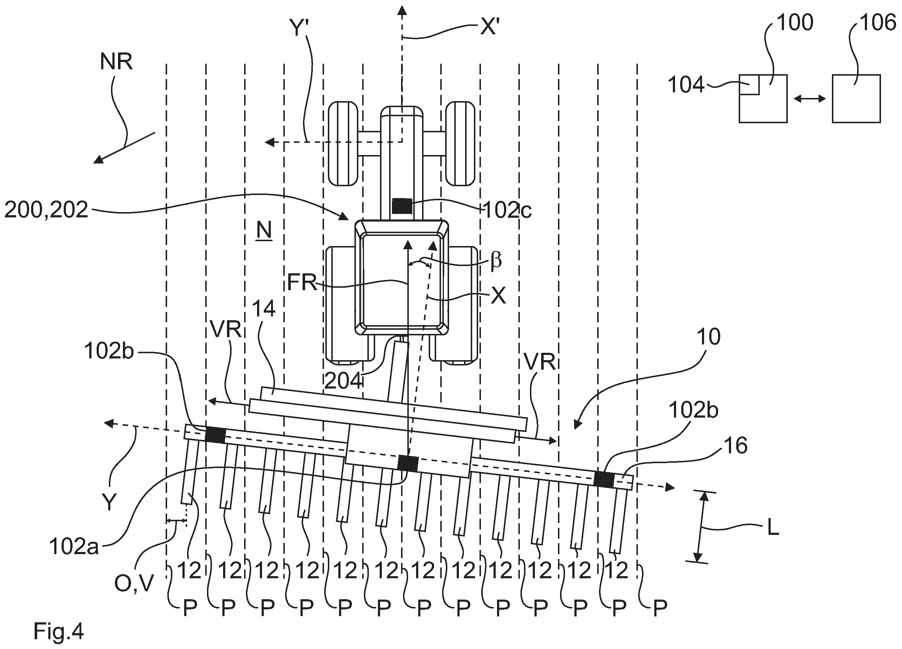

Die Fig. 3 und 4 zeigen eine von einem Trägerfahrzeug 200 getragene landwirtschaftliche Anbaumaschine 10, welche als landwirtschaftliche Hacke ausgebildet ist und auf einer landwirtschaftlichen Nutzfläche N einen Bodenbearbeitungs- und/oder Pflanzenpflegevorgang ausführt. Das Trägerfahrzeug 200 und die von dem Trägerfahrzeug 200 getragene Anbaumaschine 10 bewegen sich in der Fahrtrichtung FR entlang der Pflanzenreihen P über die Nutzfläche N, wobei die Nutzfläche N eine Hangneigung in der Neigungsrichtung NR aufweist und wobei die Fahrtrichtung FR des Trägerfahrzeugs 200 sowie der Anbaumaschine 10 schräg zur Neigungsrichtung NR der geneigten Nutzfläche N verläuft. In der in den Fig. 3 und 4 dargestellten Situation fahren das Trägerfahrzeug 200 und die Anbaumaschine 10 in ihrer Fahrtrichtung FR somit auf der Nutzfläche N schräg hangaufwärts.

Durch die Fahrt der Anbaumaschine 10 an einer landwirtschaftlichen Nutzfläche N mit Hangneigung, insbesondere durch den schrägen Verlauf der Fahrtrichtung FR der Anbaumaschine 10 zu der Neigungsrichtung NR der Nutzfläche N, rutscht die Anbaumaschine 10 am Hang der Nutzfläche N ab. Das Abrutschen der Anbaumaschine 10 zieht es nach sich, dass die Arbeitswerkzeuge 12 der Anbaumaschine 10, welche im Wesentlichen mittig zwischen den Pflanzenreihen P laufen sollen, nicht mehr ihre beabsichtigte Position und/oder Ausrichtung aufweisen und, wie in der Fig. 3 dargestellt, durch das Abrutschen hangabwärts in die Pflanzenreihen P hineinragen und die Nutzpflanzen somit beschädigen. Es ist daher eine Korrektur der Position und/oder Ausrichtung der Arbeitswerkzeuge 12 notwendig, indem die Arbeitswerkzeuge 12 über den Trägerbalken 16 mittels des Verschieberahmens 14 quer zur Längsachse X entlang der Querachse Y der Anbaumaschine 10 so verfahren werden, dass die Arbeitswerkzeuge 12 trotz der Hangneigung der Nutzfläche N so zwischen den Pflanzenreihen P laufen, dass keine Pflanzen beschädigt werden.

In der Fig. 4 ist die Anbaumaschine 10 in einem korrigierten Zustand gezeigt, bei welchem die Arbeitswerkzeuge 12 mittels des Verschieberahmens 14 derart in Querrichtung der Anbaumaschine 10 verfahren sind, dass die Arbeitswerkzeuge 12 im Wesentlichen mittig zwischen den Pflanzenreihen P angeordnet sind. Die zum Korrigieren mittels des Verschieberahmens 14 und mittels der Datenverarbeitungseinrichtung 100 abgeleiteten Korrekturdaten können, wie bereits im Rahmen der Fig. 2 beschrieben, aus den die Neigung α der Anbaumaschine 10 betreffenden Sensordaten abgeleitet werden.

Alternativ oder zusätzlich können die Korrekturdaten mittels der Datenverarbeitungseinrichtung 100 außerdem auf Grundlage eines Schwimmwinkels β der Anbaumaschine 10 in Bezug auf ein Referenzobjekt 202, insbesondere das Trägerfahrzeug 200, abgeleitet werden. Der Schwimmwinkel β resultiert aus dem Abrutschen der Anbaumaschine 10 hangabwärts an der geneigten Nutzfläche N, wobei aus dem Abrutschen der Anbaumaschine 10 eine Abweichung der Längsachse X und der Fahrtrichtung FR der Anbaumaschine 10 resultiert und der Schwimmwinkel β wiederum dem Winkel zwischen der Längserstreckung X und der Fahrtrichtung FR entspricht. Der Schwimmwinkel β ist zudem als der Winkel zwischen der Längserstreckung X der Anbaumaschine und der Längsachse X' des Trägerfahrzeugs 200 definiert.

Zum Ableiten des Schwimmwinkels β werden von einer als Gyroskop und/oder Beschleunigungssensor ausgebildeten Erfassungseinrichtung 102a an der Anbaumaschine 10 Sensordaten erfasst, welche die Rotation R1 um die Längsachse X der Anbaumaschine 10 und/oder die Rotation R2 der Anbaumaschine 10 um die Querachse Y der Anbaumaschine 10 betreffen. Die Datenverarbeitungseinrichtung 100 kann auf Grundlage der erfassten Rotationen R1, R2 und auf Grundlage der Geometrie der Anbaumaschine 10, welche beispielsweise in Form von Geometriedaten in dem Datenspeicher 104 der Datenverarbeitungseinrichtung 100 hinterlegt sein kann, abgeleitet. Insbesondere kann die Datenverarbeitungseinrichtung 100 den Schwimmwinkel β auf Grundlage der Geometrie der Anbaumaschine 10 und den erfassten Rotationsdaten berechnen. Die Datenverarbeitungseinrichtung 100 kann anschließend auf Grundlage des berechneten Schwimmwinkels β die Korrekturdaten, insbesondere den notwendigen Verfahrweg V des Verschieberahmens 14 zum Korrigieren der Arbeitswerkzeuge 12 ableiten, insbesondere berechnen, indem der Tangens des Schwimmwinkels β mit einer Länge L zwischen dem Schwerpunkt der Anbaumaschine 10 und dem Messpunkt des Schwimmwinkels β multipliziert wird.

Der sich daraus ergebende Verfahrweg V entspricht im Wesentlichen dem Offset O durch das Abrutschen der Anbaumaschine 10 am Hang der Nutzfläche N, sodass die Arbeitswerkzeuge 12 zum Ausgleich des Offsets O um den Verfahrweg V derart mittels des Verschieberahmens 14 verfahren werden, dass die Arbeitswerkzeuge 12 anschließend in einer beabsichtigten Position und/oder Ausrichtung angeordnet sind und folglich eine hohe Arbeitsqualität der Anbaumaschine 10 sichergestellt wird sowie Beschädigungen der Pflanzenreihen P vermieden werden.

Alternativ oder zusätzlich zu einer sensorischen Erfassung mittels der als Gyroskop ausgebildeten Erfassungseinrichtung 102a kann der Schwimmwinkel β von als Kameras ausgebildeten Erfassungseinrichtungen 102b per Bilderfassung erfasst werden. Beispielsweise kann die Ausrichtung der Anbaumaschine 10 in Bezug auf die Pflanzenreihen P von den Erfassungseinrichtungen 102b erfasst werden, wobei die Datenverarbeitungseinrichtung 100 aus den erfassten Bilddaten den Schwimmwinkel β durch eine Bildanalyse ableiten kann. Bei einer getragenen Anbaumaschine 10 kann die Neigung α der Anbaumaschine in X-Richtung und/oder in Y-Richtung zu dem über die Rotation R1' und/oder die Rotation R2' des Trägerfahrzeugs 200 von der Datenverarbeitungseinrichtung 100 abgeleitet werden.

Die Arbeitswerkzeuge 12 werden zum Korrigieren mittels des Verschieberahmens 14 um den Verfahrweg V insbesondere in der Verfahrrichtung VR verfahren, wobei die Verfahrrichtung VR im Wesentlichen parallel zur Querachse Y der Anbaumaschine 10 verläuft. Alternativ oder zusätzlich zum Verfahren der Arbeitswerkzeuge 12 mittels des Verschieberahmens 14 können die Arbeitswerkzeuge 12 auch durch Verfahren mittels einer Tragevorrichtung 204 des Trägerfahrzeugs 200 in ihrer Position und/oder Ausrichtung korrigiert werden. Die Tragevorrichtung 204 ist dabei vorzugsweise als Dreipunkthydraulik des Trägerfahrzeugs 200 ausgebildet.

### Bezugszeichen

- 10: Anbaumaschine
- 12: Arbeitswerkzeuge
- 14: Verschieberahmen
- 16: Trägerbalken

- 100: Datenverarbeitungseinrichtung
- 102a-102c: Erfassungseinrichtung
- 104: Datenspeicher
- 106: Steuerungseinrichtung

- 200: Trägerfahrzeug
- 202: Referenzobjekt
- 204: Tragevorrichtung

- FR: Fahrtrichtung
- L: Länge
- N: Nutzfläche
- NR: Neigungsrichtung
- O: Offset
- P: Pflanzenreihen
- R1, R1`, R2, R2`: Rotation
- V: Verfahrweg
- VR: Verfahrrichtung
- X, X`: Längsachse
- Y, Y`: Querachse

- α: Neigung der Anbaumaschine
- β: Schwimmwinkel

## Patentansprüche

1. Landwirtschaftliche Anbaumaschine (10), insbesondere landwirtschaftliche Hacke oder Feldspritze, mit
- mehreren Arbeitswerkzeugen (12) zum Bearbeiten des Bodens und/oder zum Pflegen von Nutzpflanzen auf einer landwirtschaftlichen Nutzfläche (N), und
- einem Verschieberahmen (14), welcher dazu eingerichtet ist, die Arbeitswerkzeuge (12) zum Korrigieren der Position und/oder der Ausrichtung der Arbeitswerkzeuge (12) in Abhängigkeit eines aktuellen Maschinenzustands der Anbaumaschine (10) zu verfahren,
**gekennzeichnet durch** eine elektronische Datenverarbeitungseinrichtung (100), welche dazu eingerichtet ist, aus dem aktuellen Maschinenzustand der Anbaumaschine (10) Korrekturdaten zum Korrigieren der Position und/oder der Ausrichtung der Arbeitswerkzeuge (12) mittels des Verschieberahmens (14) abzuleiten.

2. Landwirtschaftliche Anbaumaschine (10) nach Anspruch 1,
**gekennzeichnet durch** zumindest eine sensorische Erfassungseinrichtung (102a, 102b) zum Erfassen von den aktuellen Maschinenzustand der Anbaumaschine (10) betreffenden Zustandsdaten.

3. Landwirtschaftliche Anbaumaschine (10) nach Anspruch 2,
**dadurch gekennzeichnet, dass** die sensorische Erfassungseinrichtung (102a, 102b) als Neigungssensor ausgebildet ist, welcher dazu eingerichtet ist, die Neigung (α) der Anbaumaschine (10) betreffende Sensordaten zu erfassen, wobei die elektronische Datenverarbeitungseinrichtung (100) vorzugsweise dazu eingerichtet ist, aus den die Neigung (α) der Anbaumaschine (10) betreffenden Sensordaten die Neigung (α) der Anbaumaschine (10), insbesondere die Neigung (α) um eine Längsachse (X) in Fahrtrichtung (FR) der Anbaumaschine (10) und/oder die Neigung (α) um eine Querachse (Y) quer zur Fahrtrichtung (FR) der Anbaumaschine (10), abzuleiten.

4. Landwirtschaftliche Anbaumaschine (10) nach Anspruch 2 oder 3,
**dadurch gekennzeichnet, dass** die sensorische Erfassungseinrichtung (102a, 102b) Bestandteil einer Kamera ist, welche dazu eingerichtet ist, die Neigung (α) der Anbaumaschine (10) betreffende Bilddaten zu erfassen, wobei die elektronische Datenverarbeitungseinrichtung (100) vorzugsweise dazu eingerichtet ist, aus den die Neigung (α) der Anbaumaschine (10) betreffenden Bilddaten die Neigung (α) der Anbaumaschine (10), insbesondere die Neigung (α) um eine Längsachse (X) in Fahrtrichtung (FR) der Anbaumaschine (10) und/oder die Neigung (α) um eine Querachse (Y) quer zur Fahrtrichtung (FR) der Anbaumaschine (10), abzuleiten.

5. Landwirtschaftliche Anbaumaschine (10) nach einem der vorstehenden Ansprüche,
**dadurch gekennzeichnet, dass** die elektronische Datenverarbeitungseinrichtung (100) dazu eingerichtet ist, die Korrekturdaten zum Korrigieren der Position und/oder der Ausrichtung der Arbeitswerkzeuge (12) aus der Neigung (α) der Anbaumaschine (10), insbesondere aus der Neigung (α) um die Längsachse (X) in Fahrtrichtung (FR) der Anbaumaschine (10) und/oder aus der Neigung (α) um die Querachse (Y) quer zur Fahrtrichtung (FR) der Anbaumaschine (10), abzuleiten.

6. Landwirtschaftliche Anbaumaschine (10) nach einem der vorstehenden Ansprüche,
**dadurch gekennzeichnet, dass** die elektronische Datenverarbeitungseinrichtung (100) dazu eingerichtet ist, die Korrekturdaten zum Korrigieren der Position und/oder der Ausrichtung der Arbeitswerkzeuge (12) auf Grundlage von hinterlegten Referenzdaten abzuleiten, wobei die elektronische Datenverarbeitungseinrichtung (100) vorzugsweise dazu eingerichtet ist, die Korrekturdaten durch einen Vergleich der Neigung (α) der Anbaumaschine (10) mit den hinterlegten Referenzdaten abzuleiten.

7. Landwirtschaftliche Anbaumaschine (10) nach Anspruch 6,
**dadurch gekennzeichnet, dass** die hinterlegten Referenzdaten Neigungsreferenzwerte für die Neigung (α) um die Längsachse (X) in Fahrtrichtung (FR) der Anbaumaschine (10) und/oder Neigungsreferenzwerte für die Neigung (α) um die Querachse (Y) quer zur Fahrtrichtung (FR) der Anbaumaschine (10) umfassen, wobei die elektronische Datenverarbeitungseinrichtung (100) vorzugsweise dazu eingerichtet ist,
- die Korrekturdaten durch einen Vergleich der Neigung (α) um die Längsachse (X) in Fahrtrichtung (FR) der Anbaumaschine (10) mit den Neigungsreferenzwerten für die Neigung (α) um die Längsachse (X) in Fahrtrichtung (FR) der Anbaumaschine (10) und/oder der Neigung (α) um die Querachse (Y) quer zur Fahrtrichtung (FR) der Anbaumaschine (10) mit den Neigungsreferenzwerten für die Neigung (α) um die Querachse (Y) quer zur Fahrtrichtung (FR) der Anbaumaschine (10), abzuleiten, und/oder
- die Neigung (α) um die Längsachse (X) in Fahrtrichtung (FR) der Anbaumaschine (10) einem Neigungsreferenzwert für die Neigung (α) um die Längsachse (X) in Fahrtrichtung (FR) der Anbaumaschine (10) und/oder die Neigung (α) um die Querachse (Y) quer zur Fahrtrichtung (FR) der Anbaumaschine (10) einem Neigungsreferenzwert für die Neigung (α) um die Querachse (Y) quer zur Fahrtrichtung (FR) der Anbaumaschine (10) zuzuordnen, und/oder
- durch das Zuordnen der Neigung (α) um die Längsachse (X) in Fahrtrichtung (FR) der Anbaumaschine (10) zu dem Neigungsreferenzwert für die Neigung (α) um die Längsachse (X) in Fahrtrichtung (FR) der Anbaumaschine (10) und/oder der Neigung (α) um die Querachse (Y) quer zur Fahrtrichtung (FR) der Anbaumaschine (10) zu dem Neigungsreferenzwert für die Neigung (α) um die Querachse (Y) quer zur Fahrtrichtung (FR) der Anbaumaschine (10) die Korrekturdaten, insbesondere einen Korrekturwert, zum Korrigieren der Position und/oder der Ausrichtung auszuwählen und/oder zu berechnen.

8. Landwirtschaftliche Anbaumaschine (10) nach einem der Ansprüche 2 bis 7,
**dadurch gekennzeichnet, dass** die sensorische Erfassungseinrichtung (102a, 102b) als Beschleunigungssensor und/oder als Gyroskop ausgebildet ist, wobei die sensorische Erfassungseinrichtung (102a, 102b) dazu eingerichtet ist, die Lage und/oder die Ausrichtung und/oder Richtungsänderungen der Anbaumaschine (10) betreffende Sensordaten zu erfassen, wobei die elektronische Datenverarbeitungseinrichtung (100) vorzugsweise dazu eingerichtet ist, aus den die Lage und/oder die Ausrichtung und/oder Richtungsänderungen der Anbaumaschine (10) betreffenden Sensordaten die Lage und/oder die Ausrichtung und/oder Richtungsänderungen der Anbaumaschine (10), vorzugsweise in Bezug auf ein Referenzobjekt (202), abzuleiten.

9. Landwirtschaftliche Anbaumaschine (10) nach einem der Ansprüche 2 bis 8,
**dadurch gekennzeichnet, dass** die sensorische Erfassungseinrichtung (102a, 102b) Bestandteil einer Kamera ist, welche dazu eingerichtet ist, die Lage und/oder die Ausrichtung und/oder Richtungsänderungen der Anbaumaschine (10) betreffende Bilddaten zu erfassen, wobei die elektronische Datenverarbeitungseinrichtung (100) vorzugsweise dazu eingerichtet ist, aus den die Lage und/oder die Ausrichtung und/oder Richtungsänderungen der Anbaumaschine (100) betreffenden Bilddaten die Lage und/oder die Ausrichtung und/oder Richtungsänderungen der Anbaumaschine (10), vorzugsweise in Bezug auf ein Referenzobjekt (202), abzuleiten.

10. Landwirtschaftliche Anbaumaschine (10) nach einem der vorstehenden Ansprüche,
**dadurch gekennzeichnet, dass** die elektronische Datenverarbeitungseinrichtung (100) dazu eingerichtet ist, die Korrekturdaten zum Korrigieren der Position und/oder der Ausrichtung der Arbeitswerkzeuge (12) aus der Lage und/oder Ausrichtung und/oder Richtungsänderungen der Anbaumaschine (10), vorzugsweise in Bezug auf ein Referenzobjekt (202), abzuleiten, wobei die elektronische Datenverarbeitungseinrichtung (100) vorzugsweise dazu eingerichtet ist, die Korrekturdaten unter Anwendung einer Berechnungsroutine auf Grundlage der Lage und/oder Ausrichtung und/oder Richtungsänderungen der Anbaumaschine (10) und/oder auf Grundlage der Geometrie der Anbaumaschine (10) zu berechnen.

11. Landwirtschaftliche Anbaumaschine (10) nach einem der vorstehenden Ansprüche,
**gekennzeichnet durch** eine elektronische Steuerungseinrichtung (106), welche dazu eingerichtet ist, das Verfahren der Arbeitswerkzeuge (12) zum Korrigieren der Position und/oder der Ausrichtung der Arbeitswerkzeuge (12) mittels des Verschieberahmens (14) auf Grundlage der mittels der elektronischen Datenverarbeitungseinrichtung (100) abgeleiteten Korrekturdaten zu steuern, wobei die Korrekturdaten vorzugsweise Steuerungsvorgaben für die Steuerungseinrichtung (106) zum Steuern des Verfahrens der Arbeitswerkzeuge (12) umfassen, wobei die Steuerungsvorgaben insbesondere Informationen zu einem für das Korrigieren der Position und/oder der Ausrichtung der Arbeitswerkzeuge (12) auszuführenden Verfahrweg (V) des Verschieberahmens (14) enthalten.

12. Landwirtschaftliche Anbaumaschine (10) nach einem der vorstehenden Ansprüche,
**dadurch gekennzeichnet, dass** das Korrigieren der Position und/oder der Ausrichtung der Arbeitswerkzeuge (12) das Verändern der Position und/oder der Ausrichtung der Arbeitswerkzeuge (12) in Bezug auf Nutzpflanzen auf der landwirtschaftlichen Nutzfläche (N), insbesondere das Verändern des Abstands der Arbeitswerkzeuge (12) zu Pflanzenreihen (P) auf der landwirtschaftlichen Nutzfläche (N), betrifft.

13. Verfahren zum Einstellen einer landwirtschaftlichen Anbaumaschine (10), insbesondere einer landwirtschaftlichen Hacke oder Feldspritze, vorzugsweise einer landwirtschaftlichen Anbaumaschine (10) nach einem der vorstehenden Ansprüche, mit den Schritten:
- Bearbeiten des Bodens und/oder zum Pflegen von Nutzpflanzen auf einer landwirtschaftlichen Nutzfläche (N) mittels mehrerer Arbeitswerkzeuge (12) der Anbaumaschine (10),
- Erfassen von einen aktuellen Maschinenzustand der Anbaumaschine (10) betreffenden Zustandsdaten mittels zumindest einer Erfassungseinrichtung (102a, 102b), und
- Verfahren der Arbeitswerkzeuge (12) zum Korrigieren der Position und/oder der Ausrichtung der Arbeitswerkzeuge (12) in Abhängigkeit eines aktuellen Maschinenzustands der Anbaumaschine (10) mittels eines Verschieberahmens (14) der Anbaumaschine (10), **gekennzeichnet durch** den Schritt:
- Ableiten von Korrekturdaten zum Korrigieren der Position und/oder der Ausrichtung der Arbeitswerkzeuge (12) mittels des Verschieberahmens (14) aus dem aktuellen Maschinenzustand der Anbaumaschine (10) mittels einer elektronischen Datenverarbeitungseinrichtung (100).
